# EUROPEAN PATENT SPECIFICATION

(11) **EP 4 545 356 B1**
(45) Date of publication and mention of the grant of the patent: **31.12.2025**
(21) Application number: 24206358.4
(22) Date of filing: 14.10.2024
(51) Int. Cl.: B60P 3/39, H02K 11/21, H02K 7/116, H02K 7/14

(54) **CONTROL DEVICE FOR BED MOVEMENT SYSTEMS**
STEUERVORRICHTUNG FÜR BETTBEWEGUNGSSYSTEME
DISPOSITIF DE COMMANDE POUR SYSTÈMES DE DÉPLACEMENT DE LIT

(30) Priority: 23.10.2023 IT 202300022065
(43) Date of publication of application: 30.04.2025
(73) Proprietor: Trigano Servizi S.r.l., 53036 Poggibonsi (SI) (IT)
(72) Inventor: MUGNAINI, Andrea, 53036 Poggibonsi (SI) (IT); LORI, Massimo, 53036 Poggibonsi (SI) (IT); GENTILE, Giancarlo, 53036 Poggibonsi (SI) (IT); VALENTI, Giacomo, 50050 Capraia e Limite (FI) (IT); NARDINI, Davide, 50041 Calenzano (FI) (IT)
(74) Representative: Mincone, Antimo

(56) References cited:
- EP-A1- 3 050 749
- EP-A2- 1 968 169
- EP-B2- 2 396 267
- US-B1- 11 518 294

## Description

The present invention relates to a control device for bed handling systems installed in vehicles such as campers and similar so-called recreational vehicles.

It is known that in vehicles such as campers, beds can be installed that can assume a lowered use position and a raised position for storage, connected to systems that allow their movement between said positions.

Such systems generally involve the use of belts to which a structure that constitutes the base of a bed is connected. The bed base is raised to the storage position or lowered to the position of use by means of the belts to which it is connected. Suitable electric actuators allow the movement of the bed to be controlled by means of the belts which are configured so as to wind on corresponding shafts, rotated by said actuators, and respectively unwind, to move the bed thanks to the clockwise or anticlockwise rotation of the same shafts. Normally, guides are provided on the walls of the vehicle where the bed is installed, whose function is to stabilize the vertical movements of lowering and lifting of the bed thanks to specific carriages that slide on the guides on one side and are connected to the base of the bed or to the belts on another side. Examples of such systems are known e.g. from EP 2 396 267 B2, EP 3 050 749 A1 and US 11 518 294 B1.

The present invention aims, in particular, to provide a device that can be used to control the electric actuators by which the winding/unwinding shafts of the bed base lifting/lowering belts bed are operated.

This result has been achieved, in accordance with the present invention, by adopting the idea of realizing a device having the features indicated in claim 1. Other features of the present invention are the subject of the dependent claims.

Thanks to the present invention, it is possible to install the control encoder in a more favorable configuration, both from a functional point of view and from an operational and constructional point of view, also improving the reliability of the control provided by the encoder. The construction simplicity of the present device implies also a reduction of the production costs. Furthermore, the installation of the device, as well as the accessibility to the relative adjustment members and the necessary wiring, are simplified.

These and further advantages and characteristics of the present invention will be better understood by any person skilled in the art thanks to the following description and the attached drawings, provided by way of example but not to be considered in a limiting sense, in which:
Fig.1 represents a schematic exploded perspective view of a possible embodiment of a system for moving a bed equipped with a control device in accordance with the present invention;
Fig.2 represents a detail of Fig.1 from a different perspective;
Fig.3 represents a perspective view of the gearmotor-encoder group in accordance with the present invention;
Fig.4 represents a side view of the group shown in Fig.3;
Fig.5 represents a sectional view along the line A-A of Fig.4,
Fig.6 represents a view similar to that shown in Fig.3;
Fig.7 represents a further embodiment of the present invention.

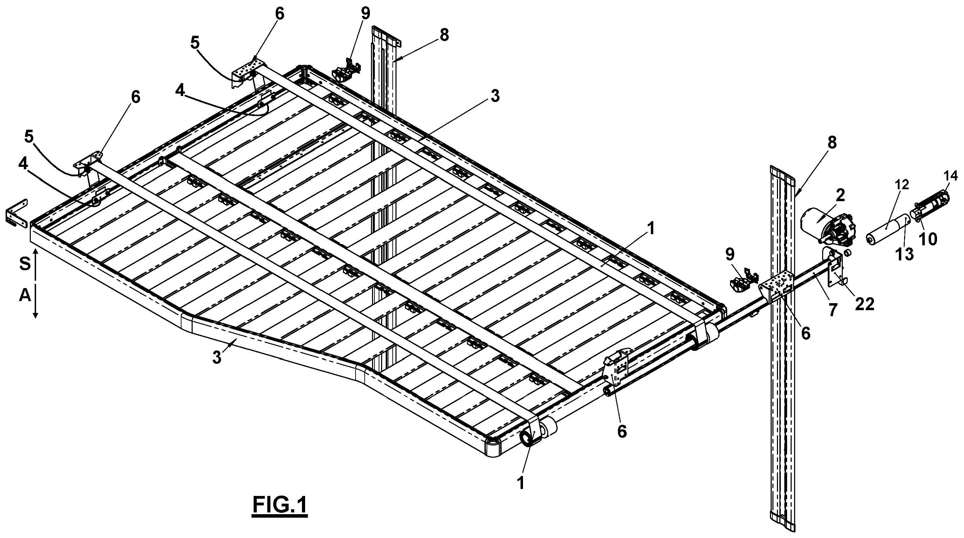

For example, a control device in accordance with the present invention can be used to control a movement system of the type shown in Fig. 1, i.e. of the type comprising a plurality of belts 1 driven by an electric gearmotor 2 as further described below and connected to a bed base 3 (a slatted base in the exemplary drawing of Fig. 1). A mattress can be placed on the base 3. By means of the belts 1, the electric gearmotor 2 controls the raising and lowering of the base 3. For example, one end of each belt 1 is constrained to a bracket 4 anchored to the bed base 3, and each belt slides on a roller 5 which, in turn, is constrained to a fixed point 6. For example, the fixed points 6 are metal brackets with holes that can be used to fix them to a wall by means of screws. A second end of each belt 1 is constrained to a shaft 7 driven by the electric gearmotor.

In practice, when the shaft 7 rotates in a first direction (for example clockwise) the belt wraps around it and the bed base 3 is raised, while when the shaft 7 rotates in the reverse direction (for example anticlockwise) the belt unwinds and the bed base 3 is lowered. In this way, the electric gearmotor 2 determines the lifting S and the lowering A of the bed base 3.

Usually, vertical guides 8 are provided, fixed on a wall of the vehicle in the bed installation area, which guide the vertical movement of the bed base 3. Usually, carriages 9 are mounted on one side of the bed base 3 facing the guides 8, which act as an interface element between the guides 8 and the bed base 3, facilitating and stabilising the vertical movement of the latter.

The electric gearmotor 2 is controlled by a programmable encoder 10 that allows to detect the direction of rotation and the angular movements of the output shaft of the electric gearmotor itself, also acting as a position transducer and controlling the upper and lower stop points, i.e. the lifting and lowering positions of the bed.

The preceding description is provided for the purpose of contextualizing the field of application of the present invention and must therefore not be understood in a limiting sense.

More generally, the present invention applies to bed handling systems installed in vehicles such as campers and similar so-called recreational vehicles in which a bed base is moved by an electric gearmotor controlled by an encoder.

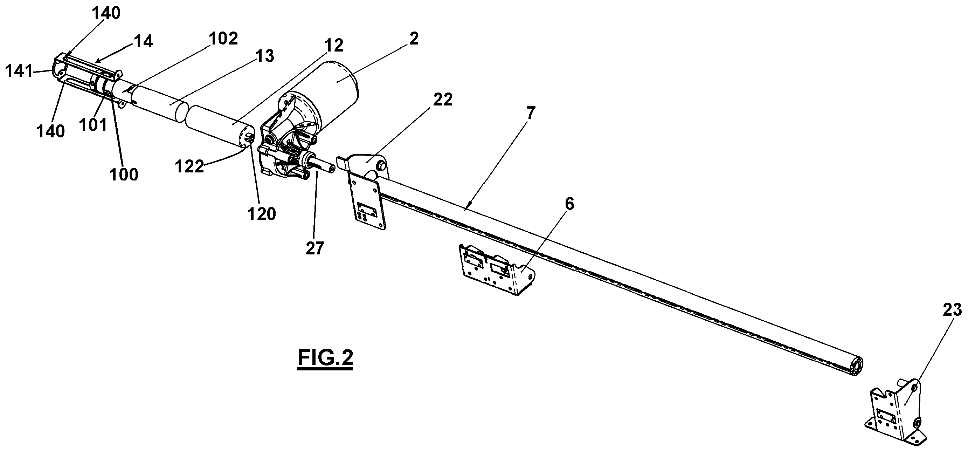

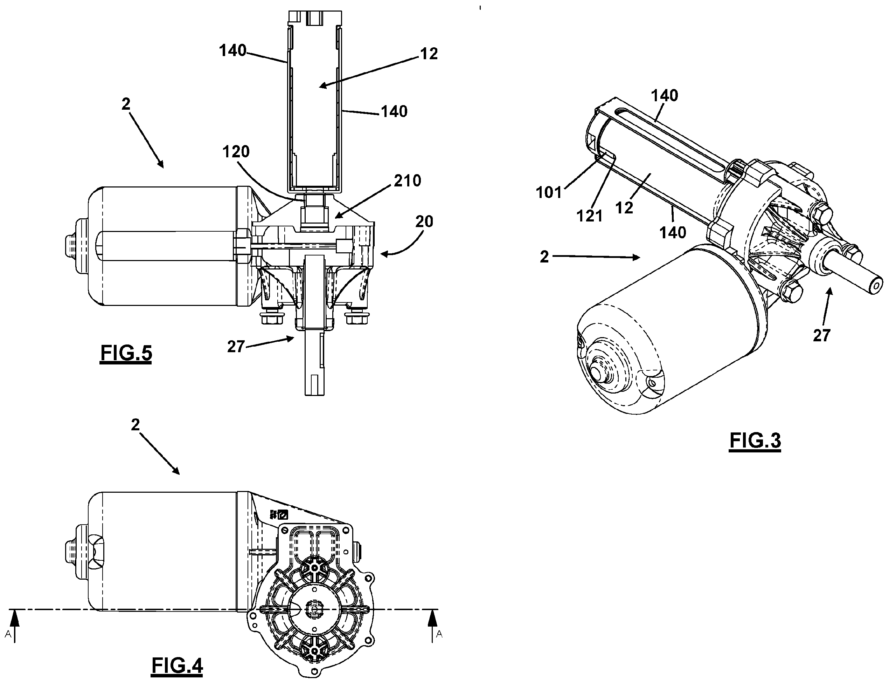

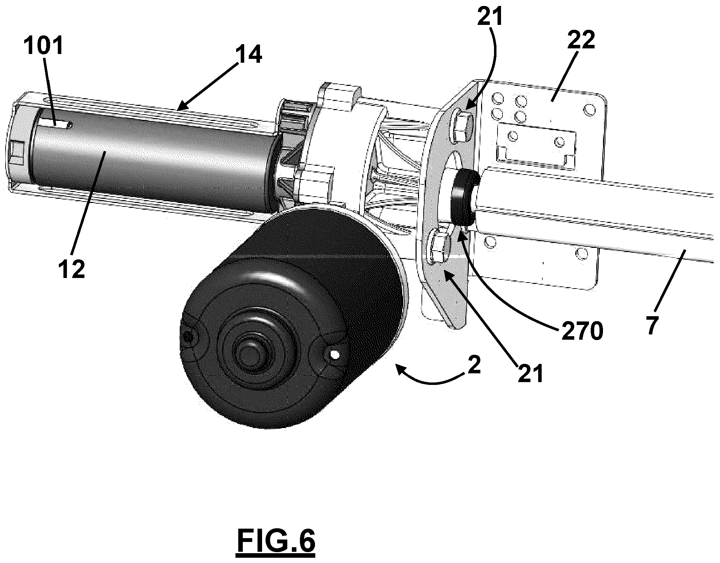

In accordance with the present invention, with reference to the example shown in Figs. 1-6, the electric gearmotor 2 has a first output 27 on which the shaft 7 for winding/unwinding the belts 1 is engaged and a second output 210 on which the rotor of the encoder 10 is engaged. In particular, the second output 210 consists of a power take-off.

Said outputs 27, 210 are formed on the output side 20 of the gearmotor 2.

The outputs 27, 210 are synchronous and are both on the same output side 20 of the gearmotor 2. In other words, between the outputs 27, 210 there are no mechanical transmissions or speed reduction devices.

Preferably, said outputs 27, 210 are coaxial with each other.

Preferably, screw connections 21 are provided on the aforementioned body 20 to allow its fastening to a support bracket 22 that, in turn, can be fastened to a wall of the vehicle in the bedinstallation area . A further bracket 23 acts as a support for the shaft 7 which substantially extends between the brackets 22 and 23.

The following description provides an example of practical implementation of a device in accordance with the present invention.

The rotor 100 of the encoder 10 can be connected to the second output 210 of the gearmotor 2 by means of a rigid tubular body 12 which, on one side, has an axial appendage 120 configured to be inserted onto the power take-off 210 and, on the opposite side, has a lateral slot 121 into which a tongue 101 protruding radially from said rotor 100 is inserted. In the accompanying exemplary drawings, the axial appendage 120 of the tubular body 12 is formed on a base 122 of the latter turned towards the second output 210 of the gearmotor 2. The radial tongue 101 and the slot 121 constitute mutually engaging parts of the rotor 100 and the body 12. In practice, the rigid body 12 constitutes a direct connection element of the rotor component of the encoder 10 with the second output 210 of the gearmotor 2.

The stator 102 of the encoder 10, which generally houses the electronic circuits for managing the signals produced by the rotation of rotor component 101, is covered by a fixed tubular shell 13 which is coaxial and internal to the tubular body 12.

Preferably, a bracket 14 can be used to fasten the encoder 10, bracket which has aplurality of arms 140 (for example, two in number) that on one side are fixed by screws to the output side 20 of the gearmotor 2 and on the opposite side are joined together by a ring 141 fastened to an external side of the encoder stator. In the mounted device configuration, the arms 140 of the bracket 14 are external with respect to the aforementioned tubular body 12.

As highlighted in the attached exemplary drawings, the structural configuration described above allows the encoder 10 to be arranged axially aligned with the shaft 7 for winding/unwinding the belts 1 according to an operational arrangement that avoids the interposition of transmissions between the output of the gearmotor and the encoder and also avoids connecting the encoder 10 to the shaft 7, so that the encoder 10 is directly connected to the output of the gearmotor 2, allowing greater precision in the detection of the angular position of the shaft 7 and a more functional installation of the encoder itself.

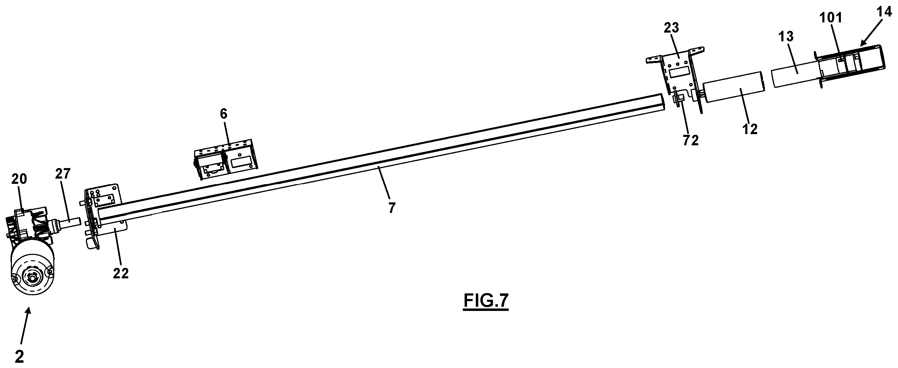

With reference to the embodiment shown in Fig.7, the shaft 7 is connected to the output 27 of the gearmotor and the rotor of the encoder 10 is connected to the shaft 7, on the side opposite to said output 27. Also in this example, the rotor of the encoder 10 is axially aligned with the output 27 of the gearmotor 2. However, while in the first example described above the coupling of the encoder rotor with the output of the gearmotor is direct, in the second example such coupling is indirect, in the sense that the shaft 7 is interposed between the output of the gearmotor and the rotor of the encoder.

Also in the example shown in Fig.7, the encoder rotor can be connected to the member that drives it into rotation (in this case the shaft 7) by means of a rigid tubular body 12 which on one side has an axial appendage 120 configured, in this example, to be coupled axially with the shaft 7. For example, this coupling can be achieved by coupling the appendage 120 of the body 12 with a corresponding axial appendage 72 of the shaft 7. The arms of the bracket 14 can be fixed to the bracket 23. The other numerical references in Fig.7 have the same meaning as previously described and therefore their description need not be repeated.

From the preceding description it is evident that a device in accordance with the present invention is a control device for bed handling systems installed in vehicles such as campers and similar so-called recreational vehicles comprising a gearmotor 2 which controls the rotation of a shaft 7 on which are attached belts 1 to which a bed base 3 is connected, wherein the rotation of the shaft 7 controlled by the gearmotor 2 in one direction or in the opposite direction causes the bed base 3 to be raised or lowered by means of the belts 1, wherein there isan encoder 10 configured to detect one or more parameters related to the rotation of said shaft 7, wherein said encoder has a rotor 101 and a stator 102, and wherein the rotor 101 of the encoder is arranged coaxially with an output 27 of the gearmotor 2 and with said shaft 7.

From the preceding description it is evident that a device in accordance with the present invention may have one or more of the following additional features, even combined with each other:
- the gearmotor (2) has two coaxial synchronous outputs 27, 210, on one 27 of said outputs the said shaft 7 is engaged, and on the other 21) of said outputs the rotor 101 of the encoder 10 is engaged.
- the rotor 101 of the encoder 10 is connected to the respective output 210 of the gearmotor 2 by means of a rigid tubular body 12.
- said rigid tubular body 12 has, on a first side, an axial appendage 120 connected to the respective output 210 of the gearmotor 2 and, on a second side, a part 121 engaged with the rotor 101 of the encoder 10.
- said part 121 of the rigid tubular body 12 consists of a lateral opening intended to engage a radial appendage of the rotor 101 of the encoder 10.
- the stator 102 of the encoder 10 is fastened to the gearmotor 2 by means of a bracket 14 which has a plurality of arms 140 which, on one side, are constrained to the gearmotor 2 and, on another side, are constrained to said stator 102, said arms 140 being external with respect to said rigid tubular body 12.
- the stator 102 of the encoder 10 is covered by a tubular shell 13 coaxial and internal to said rigid tubular body 12;
- the rotor 101 of the encoder 10 is connected to an output 27 of the gearmotor 2 by means of said shaft 7.

## Claims

1. Control device for bed handling systems installed in vehicles such as campers and similar so-called recreational vehicles comprising a gearmotor (2) which controls the rotation of a shaft (7) on which are attached belts (1) to which a bed base (3) is connected, wherein the rotation of the shaft (7) controlled by the gearmotor (2) in one direction or in the opposite direction determines the lifting or lowering of the bed base (3) by means of the belts (1), and wherein there isan encoder (10) configured to detect one or more parameters related to the rotation of said shaft (7), said encoder having a rotor (101) and a stator (102), **characterised in that** the rotor (101) of the encoder is arranged coaxially with an output (27) of the gearmotor (2) and with said shaft (7), the gearmotor (2) has two coaxial synchronous outputs (27, 210), on one (27) of said outputs the said shaft (7) is engaged, on the other (210) of said outputs is inserted the rotor (101) of the encoder (10), the rotor (101) of the encoder (10) is connected to a respective output (210) of the gearmotor (2) by means of a rigid tubular body (12), said rigid tubular body (12) has, on a first side, an axial appendage (120) connected to the respective output (210) of the gearmotor (2) and, on a second side, a part (121) engaged with the rotor (101) of the encoder (10), and said part (121) of the rigid tubular body (12) is constituted by a lateral opening intended to engage a radial appendage of the rotor (101) of the encoder (10).

2. Device according to claim 1 **characterized in that** the stator (102) of the encoder (10) is fixed to the gearmotor (2) by means of a bracket (14) which has several arms (140) which, on one side, are constrained to the gearmotor (2) and, on another side, are constrained to said stator (102), said arms (140) being external with respect to said rigid tubular body (12).

3. Device according to any of the preceding claims **characterized in that** the stator (102) of the encoder (10) is covered by a tubular shell (13) coaxial and internal to said rigid tubular body (12).

4. Device according to claim 1 **characterized in that** the rotor (101) of the encoder (10) is connected to said output (27) of the gearmotor (2) by means of said shaft (7).

## Patentansprüche

1. Steuervorrichtung für Bettenhandhabungssysteme, die in Fahrzeugen, wie Wohnmobilen und ähnlichen sogenannten Freizeitfahrzeugen, eingebaut sind, umfassend einen Getriebemotor (2), der die Drehung einer Welle (7) steuert, auf der Riemen (1) angebracht sind, mit denen ein Bettgestell (3) verbunden ist, wobei die durch den Getriebemotor (2) gesteuerte Drehung der Welle (7) in eine Richtung oder in die entgegengesetzte Richtung das Anheben oder Absenken des Bettgestells (3) mittels der Riemen (1) bestimmt und wobei ein Encoder (10) vorhanden ist, der dazu konfiguriert ist, einen oder mehrere Parameter in Bezug auf die Drehung der Welle (7) zu detektieren, wobei der Encoder einen Rotor (101) und einen Stator (102) aufweist, **dadurch gekennzeichnet, dass** der Rotor (101) des Encoders koaxial zu einem Ausgang (27) des Getriebemotors (2) und zu der Welle (7) angeordnet ist, der Getriebemotor (2) zwei koaxiale Synchronausgänge (27, 210) aufweist, wobei an einem (27) der Ausgänge die Welle (7) eingreift, an dem anderen (210) der Ausgänge der Rotor (101) des Encoders (10) eingesetzt ist, der Rotor (101) des Encoders (10) mittels eines starren rohrförmigen Körpers (12) mit einem jeweiligen Ausgang (210) des Getriebemotors (2) verbunden ist, wobei der starre rohrförmige Körper (12) auf einer ersten Seite einen axialen Ansatz (120), der mit dem jeweiligen Ausgang (210) des Getriebemotors (2) verbunden ist, und auf einer zweiten Seite ein Teil (121) aufweist, das mit dem Rotor (101) des Encoders (10) in Eingriff steht, und wobei das Teil (121) des starren rohrförmigen Körpers (12) durch eine seitliche Öffnung gebildet ist, die dazu festgelegt ist, in einen radialen Ansatz des Rotors (101) des Encoders (10) einzugreifen.

2. Vorrichtung nach Anspruch 1, **dadurch gekennzeichnet, dass** der Stator (102) des Encoders (10) mittels einer Halterung (14), die mehrere Arme (140) aufweist, die auf einer Seite an den Getriebemotor (2) gebunden sind und auf einer anderen Seite an den Stator (102) gebunden sind, an dem Getriebemotor (2) fixiert ist, wobei die Arme (140) in Bezug auf den starren rohrförmigen Körper (12) außerhalb liegen.

3. Vorrichtung nach einem der vorhergehenden Ansprüche, **dadurch gekennzeichnet, dass** der Stator (102) des Encoders (10) von einem rohrförmigen Mantel (13) bedeckt ist, der koaxial zu dem starren rohrförmigen Körper (12) ist und innerhalb von diesem liegt.

4. Vorrichtung nach Anspruch 1, **dadurch gekennzeichnet, dass** der Rotor (101) des Encoders (10) mittels der Welle (7) mit dem Ausgang (27) des Getriebemotors (2) verbunden ist.

## Revendications

1. Dispositif de commande pour systèmes de manipulation de lit installés dans des véhicules tels que des autocaravanes et des véhicules similaires dits de loisirs comprenant un motoréducteur (2) qui commande la rotation d'un arbre (7) sur lequel sont fixées des courroies (1) auxquelles un sommier (3) est relié, ladite rotation de l'arbre (7) commandé par le motoréducteur (2) dans un sens ou dans le sens opposé déterminant le levage ou l'abaissement du sommier (3) au moyen des courroies (1), et un codeur (10) étant présent, configuré pour détecter un ou plusieurs paramètres liés à la rotation dudit arbre (7), ledit codeur possédant un rotor (101) et un stator (102), **caractérisé en ce que** le rotor (101) du codeur est agencé coaxialement avec une sortie (27) du motoréducteur (2) et avec ledit arbre (7), le motoréducteur (2) possède deux sorties synchrones coaxiales (27, 210), sur l'une (27) desdites sorties ledit arbre (7) est en prise, sur l'autre (210) desdites sorties est inséré le rotor (101) du codeur (10), le rotor (101) du codeur (10) est relié à une sortie respective (210) du motoréducteur (2) au moyen d'un corps tubulaire rigide (12), ledit corps tubulaire rigide (12) possède, sur un premier côté, un appendice axial (120) relié à la sortie respective (210) du motoréducteur (2) et, sur un second côté, une partie (121) en prise avec le rotor (101) du codeur (10), et ladite partie (121) du corps tubulaire rigide (12) étant constituée par une ouverture latérale destinée à venir en prise avec un appendice radial du rotor (101) du codeur (10).

2. Dispositif selon la revendication 1 **caractérisé en ce que** le stator (102) du codeur (10) est fixé au motoréducteur (2) au moyen d'un support (14) qui comporte plusieurs bras (140) qui, sur un côté, sont contraints sur le motoréducteur (2) et, sur un autre côté, sont contraints sur ledit stator (102), lesdits bras (140) étant externes par rapport audit corps tubulaire rigide (12).

3. Dispositif selon l'une quelconque des revendications précédentes, **caractérisé en ce que** le stator (102) du codeur (10) est recouvert par une coque tubulaire (13) coaxiale et interne audit corps tubulaire rigide (12).

4. Dispositif selon la revendication 1, **caractérisé en ce que** le rotor (101) du codeur (10) est relié à ladite sortie (27) du motoréducteur (2) au moyen dudit arbre (7).
